Europäisches Patentamt

European Patent Office

Office européen des brevets

(11) Veröffentlichungsnummer: **0 207 176**
**B1**

(12) **EUROPÄISCHE PATENTSCHRIFT**

(45) Veröffentlichungstag der Patentschrift:
17.01.90

(21) Anmeldenummer: 85107037.5

(22) Anmeldetag: 07.06.85

(51) Int. Cl. ⁴: **G 01 N 15/02**

(54) Gerät zur Bestimmung von Korngrössen.

(43) Veröffentlichungstag der Anmeldung:
07.01.87 Patentblatt 87/02

(45) Bekanntmachung des Hinweises auf die Patenterteilung:
17.01.90 Patentblatt 90/03

㊴ Bennante Vertragsstaaten:
DE FR GB IT

(56) Entgegenhaltungen:
FR-A-1 227 526
FR-A-2 122 034
US-A-3 469 921
US-A-3 830 569
US-A-3 981 562
US-A-4 213 036
US-A-4 274 741
US-A-4 290 695

(73) Patentinhaber: Fritsch GmbH
Hauptstrasse 542
D-6580 Idar-Oberstein (DE)

(72) Erfinder: Giglio, Marzio, Dr.
Via Hajech 29
I-20100 Milano (IT)
Erfinder: Perini, Umberto, Dr.
Viale Veneto 8
I-20075 Lodi (IT)

(74) Vertreter: Blumbach Weser Bergen Kramer Zwirner
Hoffmann Patentanwälte
Sonnenbergerstrasse 43
D-6200 Wiesbaden 1 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf ein Gerät zur Bestimmung von Korngrößen mit einem Laser zur Erzeugung eines monochromatischen Lichtbündels, mit einem Fotodetektor, mit einem optischen System zum Konzentrieren des Lichtbündels auf den Fotodetektor, mit einer Einrichtung zur Zuführung einer Probe in eine Meßzelle, die in dem Lichtbündel angeordnet ist, so daß die Probe ein Beugungsspektrum erzeugt, mit einer Einrichtung zur feinen Auflösung der Energieverteilung des Beugungsspektrums am Fotodetektor und mit einer Analyseeinrichtung zur Errechnung von Korngrößenverteilungen aufgrund der Energieverteilung des Beugungsspektrums auf dem Fotodetektor und des eingestellten Meßbereichs.

Die Wirkungsweise derartiger Geräte beruht darauf, daß, wenn kleine Partikel von Licht getroffen werden, Beugungserscheinungen in Form von helleren und dunkleren Ringen entstehen, wobei die Größe der Ringe umgekehrt proportional zur Größe der Partikel ist. Dies kann zur Größenbestimmung der Partikel ausgenutzt werden.

Bei einem bekannten Gerät der oberbegrifflichen Art (FR-A-2 122 034) ist ein Laser als monochromatische Lichtquelle vorgesehen, der ein paralleles Strahlenbündel auf eine Meßzelle mit darin untergebrachter Probe wirft. Das hindurchtretende Strahlenbündel wird durch das optische System auf eine Blende mit ringförmiger Durchlaßöffnung fokussiert, die so groß sein muß, daß Beugungserscheinungen hindurchgelassen werden, was bei einer Lochblende nicht der Fall wäre. Hinter der Blende befindet sich der Detektor. Zur Übertragung der Beugungsringe von der Ebene der Blende auf die Ebene des Detektors ist es bekannt, eine Abbildungsoptik oder eine Faseroptik zu benutzen, um einen Detektor von kleineren Abmessungen anwenden zu können. Durch Ändern des Abbildungsmaßstabes des optischen Systems läßt sich die Größe des abgebildeten Beugungsspektrumsfleckes variieren und so die Energie einzelner oder weniger Beugungsringe ermitteln, um zur feinen Auflösung der Energieverteilung des Beugungsspektrums zu gelangen. Nachteilig ist der Umstand, daß das zwischen Probe und Blende angeordnete optische System einen Raum benötigt, der verhindert, daß die Probe sehr nahe an die Blende bzw. den Detektor herangerückt werden kann. Von sehr feinen Partikeln ausgehende Beugungserscheinungen, welche einen sehr großen Öffnungswinkel haben, werden deshalb nicht erfaßt.

Zur Auflösung der Energieverteilung des Beugungsspektrums ist es bereits bekannt (US-A-4 274 741), eine Vielzahl von Empfangselementen zu benutzen, jedoch in einer Anordnung des optischen Systems zwischen Probenhalter und Detektor, so daß wiederum sehr feine Korngrößen nicht erfaßt werden können.

Im Zusammenhang mit der Zählung biologischer Partikel ist es bereits bekannt (US-A-3 830 569), einen Schirm mit zwei bis vier angepaßt großen, ringsegmentförmigen Durchlaßöffnungen und einen Fotodetektor mit zwei bis vier Lichtempfangselementen vorzusehen, wobei die radialen Randabmessungen der Durchlaßöffnungen an die Beugungsringe angepaßt sind, wie diese der von Blutplättchen, weißen Blutzellen, roten Blutzellen und entfärbten Blutzellen (Hämatokrit) erzeugt werden. Diese Blutkörperchen weisen gut vorbekannte Partikelgrößen auf, d. h. es geht nicht um die Bestimmung von unbekannten Korngrößen, sondern lediglich um die Zählung der Blutkörperchen. Dabei werden von jeder Probe zwei Meßproben hergestellt, bei denen die roten Blutkörperchen entweder sphärisiert oder hämolysiert werden. Das optische System weist eine Lochblende und ein Abbildungsobjektiv auf, welche die Lochblende auf den Schirm mit den zwei bis vier Durchlaßöffnungen abbildet, wobei zwischen Abbildungsobjektiv und Fotodetektor ein konvergentes Strahlenbündel gebildet wird. Die Meßzelle ist in dem konvergenten Strahlenbündel angeordnet und wird in zwei unterschiedliche Positionen gebracht, sofern man mit nur zwei Lichtempfangselementen auskommen will. In der einen Position enthält die Meßzelle sphärisierte rote Blutkörperchen und in der anderen Position hämolysierte rote Blutkörperchen. Die jeweils gemessene Intensität kann unmittelbar proportional zu der Anzahl der jeweiligen Blutkörperchen gewertet werden. Ein derartiges Zählgerät biologischer Partikel eignet sich nicht zur allgemeinen Bestimmung von Korngrößen, die in breiter Verteilung und in unterschiedlichen, unbekannten Größenklassen vorliegen können.

Der Erfindung liegt die Aufgabe zugrunde, ein Gerät zur Korngrößenbestimmung der eingangs genannten Art zu schaffen, das auch sehr kleine Korngrößen zu erfassen ermöglicht.

Zur Lösung dieser Aufgabe ist das Gerät gekennzeichnet durch folgende Merkmale:

- die Meßzelle ist in einem konvergenten Strahlenbündel unmittelbar vor dem Fotodetektor angeordnet;
- das Gerät ist derart ausgebildet, daß die Meßzelle zur Messung kleinster Korngrößen ganz nahe an den Fotodetektor annäherbar ist, wobei der Abstand zwischen Meßzelle und Fotodetektor die Größenklasse des eingestellten Meßbereiches festlegt, für welche die Korngrößen optimal bestimmt werden;
- das optische System zur Erzeugung des zum Fotodetektor konvergierenden Strahlenbündels weist eine Lochblende und ein dahinter angeordnetes Abbildungsobjektiv auf;
- als Einrichtung zur feinen Auflösung der Energieverteilung weist der Fotodetektor eine Vielzahl von Lichtempfangselementen auf;
- der Abstand der Meßzelle vom Fotodetektor ist in die Analyseeinrichtung eingebbar.

Bei dieser Lösung kann ein großer Gesamtmeßbereich von beispielsweise 1 bis 1000 μm bewältigt werden, wobei dieser große Gesamtmeßbereich in einzelne einzustellende Meßbereiche aufgeteilt wird, in denen die Korngrößenbestimmung nach beispielsweise 31 Klassen erfolgt. Bei Änderung des jeweils eingestellten Meßbereiches muß keine Justierung der Meßanordnung erfolgen. Die Messung kann automatisch durchgeführt werden, wie dies etwa bei Prozeßsteuerungen erforderlich ist. Die Meßergebnisse können in einem Sichtgerät dargestellt werden, welches an den Computer angeschlossen ist; in gleicher Weise können ein Drucker zur Aufzeichnung der Ergebnisse oder Disketten zur Ergebnisspeicherung vorgesehen sein.

Weitere Einzelheiten der Erfindung werden in den Unteransprüchen abgehandelt und anhand der Zeichnungen beschrieben. Dabei zeigt:

Fig. 1    den Gesamtaufbau des Gerätes, in schematischer Darstellung;

Fig. 2    einen Längsschnitt durch das Gerät, schematisiert,

Fig. 3    eine vergrößerte Einzelheit aus Fig. 2,

Fig. 4    einen Schnitt durch eine Meßzelle,

Fig. 5    eine Einzelheit der Meßzelle in Draufsicht,

Fig. 6    einen Blendenhalter, auseinandergezogen

Fig. 7    einen Linsenhalter, perspektivisch,

Fig. 8    den Linsenhalter im Schnitt und

Fig. 9    einen Fotodetektor.

Daß Gerät zur Bestimmung von Korngrößen enthält drei hauptsächliche Geräteteile: eine Probenzuführeinrichtung 1, eine optische Meßanordnung 2 und eine Analyseeinrichtung 3.

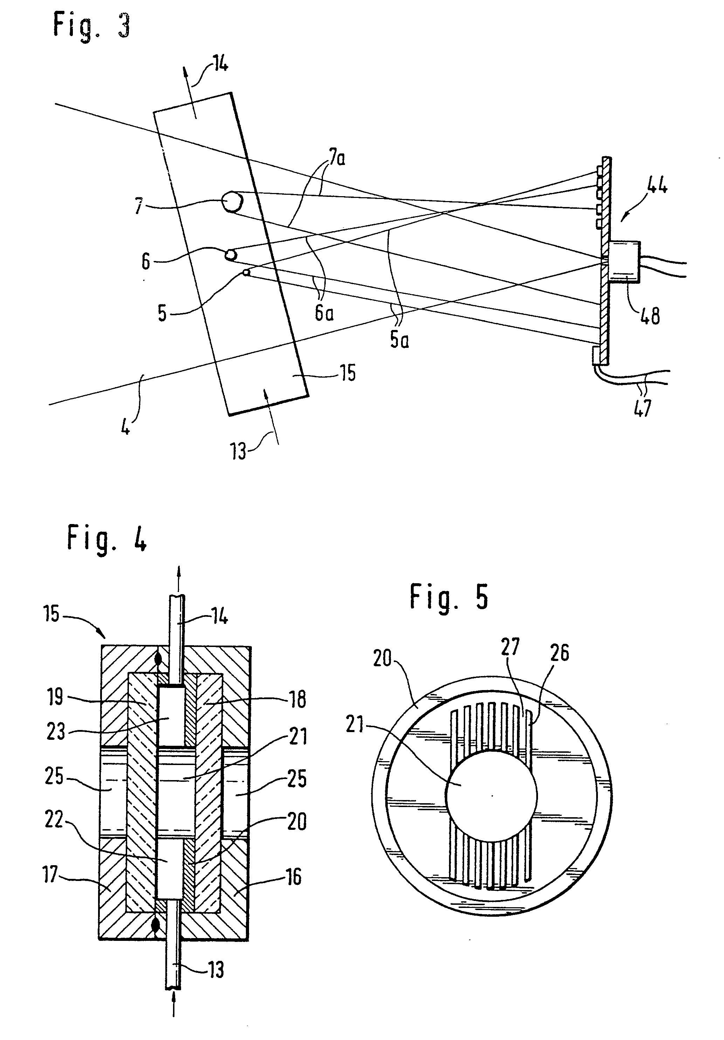

Die Probenzuführeinrichtung 1 enthält ein Gefäß 10 zur Aufnahme der Probe und von Suspensionsflüssigkeit, ferner einen Rührer 11 und eine Umwälzpumpe 12, die über einen Förderschlauch 13 sowie einen Rückführschlauch 14 mit einer Meßzelle 15 verbunden sind, die innerhalb der optischen Meßanordnung 2 angeordnet ist. Die Meßzelle 15 (Fig. 4) besitzt ein zweischaliges äußeres Gehäuse 16, 17 und zwei planparallel geschliffene, lichtdurchlässige Platten 18, 19, die durch einen Abstandshalter 20 im Abstand voneinander gehalten werden und einen Meßraum 21 sowie Stabilisierungsräume 22, 23 umschließen. Die Gehäuseschalen 16, 17 und der Abstandshalter 20 weisen jeweils eine mittige Aussparung auf, um ein Fenster 25 zu bilden. Der Abstandshalter 20 weist ferner Rippen oder Leitwände 26 und zwischen diesen angeordnete schlitzförmige Kanäle 27 auf, die sich parallel zueinander zwischen der Zufuhrleitung 13 und der Abfuhrleitung 14 erstrecken. Diese Leitwände 26 stellen Mittel zur Erzeugung einer laminaren Strömung dar, so daß die Räume 22, 23, in welchen die Leitwände 26 angeordnet sind, als Stabilisierungsräume bezeichnet werden können. Wenn demnach die Suspensionsflüssigkeit in den Meßraum 21 eintritt, werden keine oder sehr kleine Wirbel erzeugt, und die Gefahr der Entmischung oder Fehlverteilung der Partikel in der Suspensionsflüssigkeit wird vermieden.

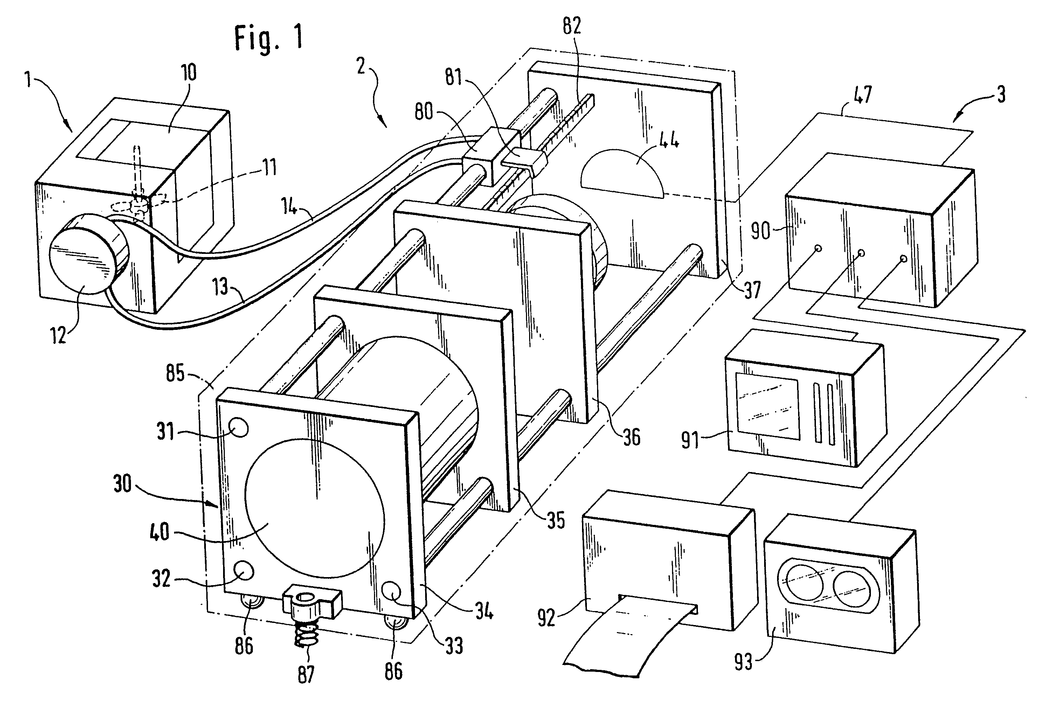

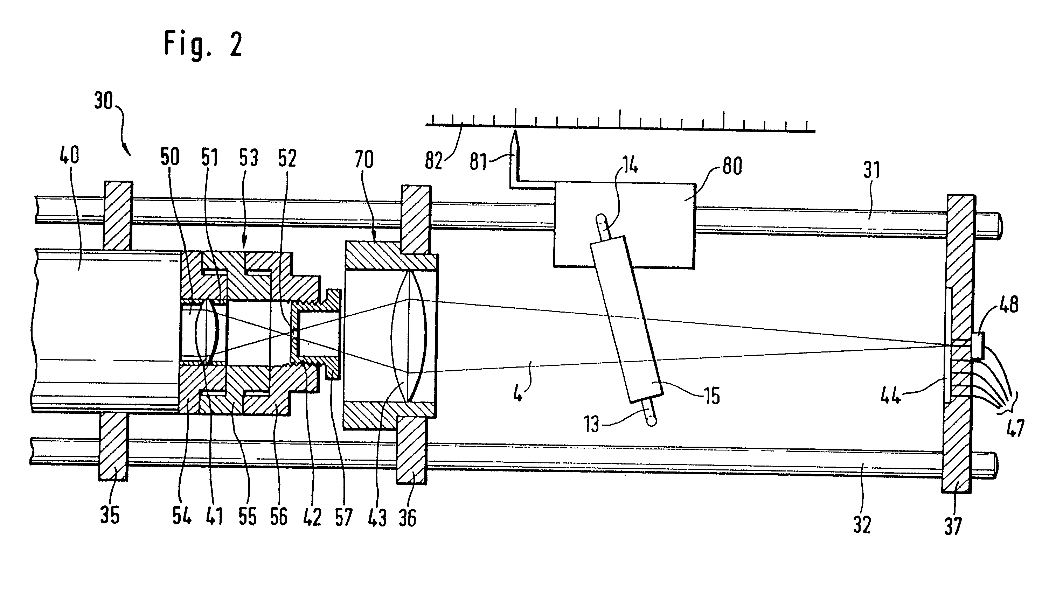

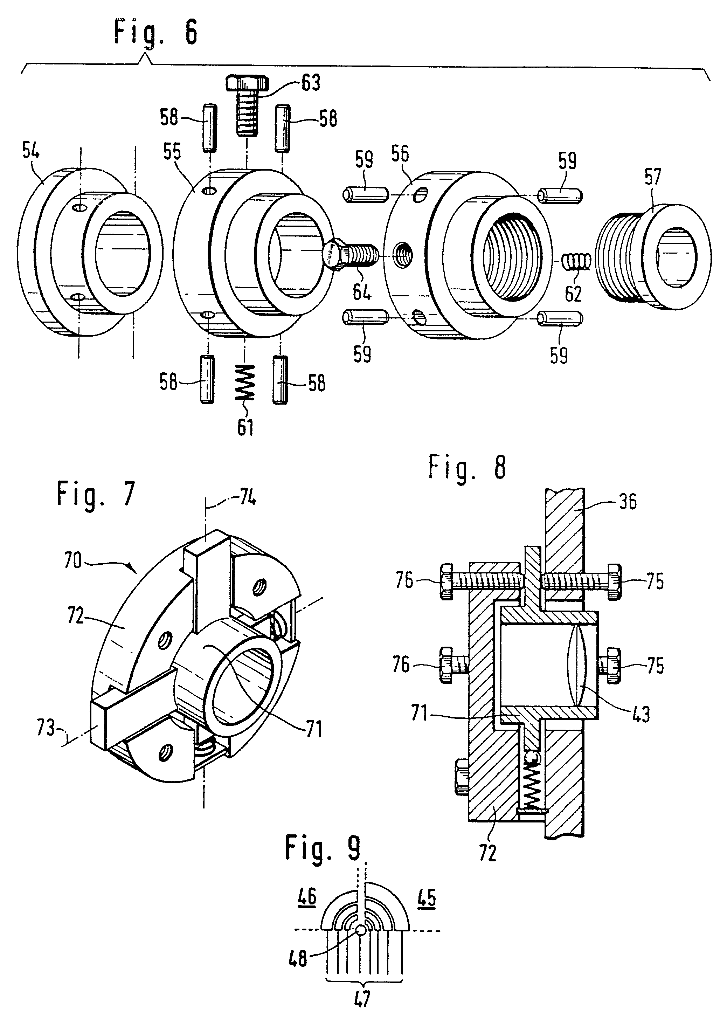

Die optische Meßanordnung 2 umfaßt ein Haltegestell 30, das aus Gründen der Anschaulichkeit in Fig. 1 perspektivisch dargestellt ist und in der Praxis etwa 1,20 m lang ist. Das Haltegestell 30 weist drei parallele Stangen 31, 32, 33 sowie vier Platten 34, bis 37 auf, welche an den Stangen 31 bis 33 befestigt sind und diese somit verbinden. Die Platten 34 bis 37 weisen jeweils Aussparungen zur Aufnahme von Geräteteilen der optischen Meßanordnung auf, die dadurch in starrer, fester Zuordnung zueinander verbleiben. Im einzelnen ist ein Laser 40 (Fig. 2) in den Aussparungen der Platten 34, 35 befestigt, eine Kondensorlinse 41 sitzt am Laser 40, eine Lochblende 42 ist mit der Kondensorlinse 41 verbunden, die Platte 36 trägt eine Abbildungslinse 43, und auf der Platte 37 sitzt ein Fotodetektor 44, der eine Vielzahl von Lichtempfangselementen 45, 46 (Fig. 9) aufweist, die als Ringbögen ausgebildet sind und staffelweise in Kreissektoren angeordnet sind. Die Lücken zwischen den Ringbögen 45 werden von den Ringbögen 46 überdeckt, und gleichermaßen werden die Lücken zwischen den Ringbögen 46 durch die Ringbögen 45 überdeckt, wenn man sich die Kreissektoren aufeinandergeklappt denkt. Es sind insgesamt 31 Ringbögen 45, 46 vorgesehen. Jeder der Ringbögen 45, 46 besitzt zwei Anschlußelektroden, die über Leitungen 47 (Fig. 1) mit der Analyseeinrichtung 3 verbunden sind, ebenso ein Fotodetektor 48 (Fig. 2), der zentral zu den Ringen des Fotodetektors 44 angeordnet ist und bei der Justierung des Gerätes benutzt wird.

Der Laser 40 (Fig. 2) gibt ein Parallelstrahlenbündel 50 ab, welches durch die Kondensorlinse 41 auf die Bohrung 52 der Lochblende 42 fokussiert werden soll. Hierzu ist eine Einstellung entweder der Kondensorlinse 41 oder der Lochblende 42 notwendig. Bevorzugt werden übliche Linsenbefestigungsmittel 51 zur Festlegung des Kondensors und ein justierbarer Blendenhalter 53 zur richtigen Lagefestlegung der Lochblende 42 nach drei Achsen. Ein fester Rahmen 54 und zwei quer zur optischen Achse verschiebliche Rahmen 55, 56 sowie eine Einstellmutter 57 dienen hierzu, wobei letztere die eigentliche Lochblende 42 trägt. Die Verschieblichkeit der Rahmen 55, 56 zueinander quer zur optischen Achse wird durch Stiftführungen 58, 59 geschaffen, die in Ebenen senkrecht zur optischen Achse angeordnet sind und zueinander wiederum senkrecht stehen. Die Rahmen 55, 56 werden nach der einen Seite durch Federn 61, 62 gedrängt und können nach der anderen Richtung durch Einstellschrauben 63, 64 verstellt werden. Mit den Schrauben 63, 64 ist somit eine XY-Einstellung quer zur optischen Achse möglich und mit der Stellmutter 57 eine Z-Einstellung in Richtung der optischen Achse.

Die Befestigung und Einstellung der Abbildungslinse 43 erfolgt mittels einer arretierbaren Doppelkardanaufhängung 70 (Fig. 7, 8). Diese enthält zwei ineinandergefügte Rahmen 71, 72, die über gekreuzte Achsen 73, 74 pendelnd verbunden sind, so daß sich die Hauptebene der Linse 43 schwenken läßt und damit genau senkrecht zur optischen Achse ausrichten läßt. Die Stellung des Rahmens 71 kann mittels zweier Einstellschrauben 75 geändert und mittels weiterer Schrauben 76 festgelegt werden.

Die Meßzelle 15 ist mit einer Trägermuffe 80 (Fig. 2) verbunden, die eine verdrehfreie Verschiebung entlang der Stange 31 als Führung ermöglicht. Wie dargestellt, ist die Meßzelle 15 leicht gegenüber der optischen Achse geneigt angeordnet, damit Reflexionen an den Gläsern 18, 19 seitlich abgelenkt werden und nicht störend bei der Messung in Erscheinung treten. Die Muffe 80 ermöglicht es, die Meßzelle 15 ganz nahe an den Fotodetektor 44 heranzubringen – in diesem Fall ist der Meßbereich für kleinste Korngrößen eingestellt – oder in die Nähe der Abbildungslinse 43 zu verfahren – in diesem Falle werden die großen Korngrößen erfaßt – oder es wird eine Zwischenstellung gewählt, um mittlere Korngrößen zu messen. Die Muffe 80 weist einen Zeiger 81 auf, der mit einer Skala 82 zusammenarbeitet und es ermöglicht, die genaue Stellung der Meßzelle 15 abzulesen. Diese Stellung ist in die Analyseeinrichtung 3 einzugeben. Es versteht sich, daß dies auch automatisch aufgrund von elektrischer Abtastung der Lage der Muffe 80 erfolgen kann.

Die Analyseeinrichtung 3 umfaßt im wesentlichen einen Rechner oder Computer 90, an den ein Sichtgerät oder Monitor 91 angeschlossen ist. An den Rechner 90 kann auch ein Datendrucker 92 oder ein magnetisches Aufzeichnungsgerät 93 angeschlossen sein.

In Fig. 3 ist das Prinzip der Messung der Korngrößen dargestellt. Die Meßzelle 15 liegt in einem konvergierenden Strahlenbündel 4, dessen Spitze auf den zentralen Fotodetektor 48 trifft. In der Meßzelle 15 seien drei Partikel 5, 6, 7 angestrahlt, die somit zugeordnete ringförmige Beugungsmuster, durch entsprechende Kegel 5a, 6a, 7a symbolisiert, erzeugen. Das kleinste Partikel 5 erzeugt den breitesten Streukegel 5a, während das gröbste Partikel 7 den engsten Streukegel 7a erzeugt. Das auftreffende Licht auf dem Fotodetektor 44 wird von dem anfänglichen punktförmigen Fleck durch die Anwesenheit von Partikeln in der Meßzelle auf einen breiteren Bereich ausgedehnt, und die Intensitätsverteilung wird aufgrund der 31 Lichtempfangselemente 45, 46 genügend fein festgestellt.

Die Auswertung dieser Lichtverteilung im Computer 90 kann in unterschiedlicher Weise erfolgen. Beispielsweise ist es möglich, eine bestimmte Korngrößenverteilung anzunehmen, daraus eine Lichtverteilung zu errechnen und diese mit der tatsächlich gemessenen Lichtverteilung zu vergleichen. Die Abweichungen werden zur Korrektur des Modells der Korngrößenverteilung benutzt, bis die Annäherung genügend fein ist und dann als Messung der Korngrößenverteilung benutzt werden kann.

Um thermische und mechanische Störeinflüsse auf das einjustierte System zu vermieden, ist das Haltegestell 30 "schwimmend" im äußeren Gehäuse 85 (Fig. 1) gelagert. Zu diesem Zweck sind Kugelstützen 86 und zwei oder mehrere unter Federspannung stehende Schiebeverbindungen 87 vorgesehen, letztere z. B. an den Platten 35 und 37, und zwar mit gekreuzten Schiebeachsen.

Statt der Benutzung von suspendierten Partikeln in einer Suspensionsflüssigkeit ist es auch möglich, einen "trockenen" Partikelstrahl zu analysieren, der beispielsweise in einem gerichteten Luftstrom mitgeführt wird. Auch Tropfen als "Partikel" können hinsichtlich ihrer Größe gemessen werden.

**Patentansprüche**

1. Gerät zur Bestimmung von Korngrößen mit einem Laser (40) zur Erzeugung eines monochromatischen Lichtbündels,
    mit einem Fotodetektor (44),
    mit einem optischen System (41 bis 43) zum Konzentrieren des Lichtbündels auf den Fotodetektor (44),
    mit einer Einrichtung (1) zur Zuführung einer Probe in eine Meßzelle (15), die in dem Lichtbündel angeordnet ist, so daß die Probe ein Beugungsspektrum erzeugt,
    mit einer Einrichtung (45, 46) zur feinen Auflösung der Energieverteilung des Beugungsspektrums am Fotodetektor (44) und
    mit einer Analyseeinrichtung (3) zur Errechnung von Korngrößenverteilungen aufgrund der Energieverteilung des Beugungsspektrums auf dem Fotodetektor (44) und des eingestellten Meßbereichs, gekennzeichnet durch folgende Merkmale:
    die Meßzelle (15) ist in einem konvergenten Strahlenbündel (4) unmittelbar vor dem Fotodetektor (44) angeordnet;
    das Gerät ist derart ausgebildet, daß die Meßzelle (15) zur Messung kleinster Korngrößen ganz nahe an den Fotodetektor (44) annäherbar ist, wobei der Abstand zwischen Meßzelle (15) und Fotodetektor (44) die Größenklasse des eingestellten Meßbereiches festlegt, für welche die Korngrößen optimal bestimmt werden;
    das optische System zur Erzeugung des zum Fotodetektor (44) konvergierenden Strahlenbündels (4) weist eine Lochblende (42) und ein dahinter angeordnetes Abbildungsobjektiv (43) auf;
    als Einrichtung zur feinen Auflösung der Energieverteilung weist der Fotodetektor (44) eine Vielzahl von Lichtempfangselementen (45, 46) auf;
    der Abstand der Meßzelle (15) vom Fotodetektor (44) ist in die Analyseeinrichtung (3) eingebbar.

2. Gerät nach Anspruch 1, dadurch gekennzeichnet, daß die Meßzelle (15) entlang von Führungen (31, 32, 33), die sich parallel zur optischen Achse des optischen Systems erstrecken, verschiebbar und arretierbar ist.

3. Gerät nach Anspruch 1 oder 2, dadurch gekennzeichnet, daß die Lichtempfangselemente (45, 46) des Fotodetektors (44) als gestaffelte, in Kreissektoren angeordnete Ringbögen ausgebildet sind, wobei die Ringbögen des einen Kreissektors (45) gegenüber den Ringbögen des anderen Kreissektors (46) radial versetzt sind.

4. Gerät nach einem der Ansprüche 1 bis 3, dadurch gekennzeichnet, daß die Meßzelle (15) zwei planparallel geschliffene, lichtdurchlässige Platten (18, 19) umfaßt, die wenigstens einen Stabilisierungsraum (22) und einen Meßraum (21) umschließen, wobei der Stabilisierungsraum (22) Mittel (26, 27) zur Erzeugung von laminarer Strömung beherbergt.

5. Gerät nach Anspruch 4, dadurch gekennzeichnet, daß die Mittel zur Erzeugung von laminarer Strömung aus parallelen Leitwänden (26) und dazwischen angeordneten, schlitzförmigen Kanälen (27) bestehen.

6. Gerät nach einem der Ansprüche 1 bis 5, dadurch gekennzeichnet, daß ein Haltegestell (30) für den Laser (40), das optische System (41 bis 43), die Meßzelle (15) und den Fotodetektor (44) vorgesehen ist, welches zueinander parallele Stangen (31, 32, 33) als Führungen und zwischen diesen befestigte Platten (34 bis 37) aufweist, und daß das Haltegestell (30) gegenüber dem äußeren Gehäuse (85) schwimmend gelagert ist.

7. Gerät nach Anspruch 6, dadurch gekennzeichnet, daß die Platten (34 bis 37) entlang der optischen Achse angeordnete Aussparungen aufweisen, in welchen jeweils der Laser (40) und das optische System (41, 42, 43) durch Befestigungsmittel gehalten sind.

8. Gerät nach Anspruch 7, dadurch gekennzeichnet, daß das Befestigungsmittel der Lochblende (42) quer zur optischen Achse verschiebbare und arretierbare Rahmen (55, 56) sowie eine in Richtung der optischen Achse verstellbare Mutter (57) aufweist.

9. Gerät nach Anspruch 7 oder 8, dadurch gekennzeichnet, daß das Befestigungsmittel des Abbildungsobjektivs (43) eine nach zwei Achsrichtungen (73 − 74) justierbare und arretierbare Aufhängung (71, 72) aufweist.

## Revendications

1. Appareil destiné à la détermination de grosseurs de particules, comportant
un laser (40) destiné à produire un faisceau lumineux monochromatique,
un détecteur photosensible (44),
un système optique (41 à 43) destiné à focaliser le faisceau lumineux sur le détecteur photosensible (44),
un dispositif (1) d'introduction d'échantillon dans une cellule de mesure (15), ladite cellule étant disposée dans le faisceau lumineux de façon à ce que l'échantillon produise un spectre de diffraction, un dispositif (45, 46) destiné à l'analyse détaillée de la répartition d'énergie du spectre de diffraction sur le détecteur photosensible (44) et
un dispositif d'analyse (3) destiné à calculer les répartitions de grosseurs de particules en fonction de la répartition d'énergie du spectre de diffraction sur le détecteur photosensible (44) et du champ de mesure réglé, caractérisé en ce que la cellule de mesure (15) est disposée dans un faisceau lumineux convergent (4), directement devant le détecteur photosensible (44);
l'appareil est construit de telle façon que l'on peut approcher la cellule de mesure (15) à proximité directe du détecteur photosensible (44) afin de pouvoir mesurer les plus petites dimensions de particules, de sorte que l'intervalle situé entre la cellule de mesure (15) et le détecteur photosensible (44) sert à déterminer l'ordre de grandeur du champ de mesure réglé pour lequel on peut définir les grosseurs de particules de façon optimale;
le système optique générant le faisceau lumineux convergent (4) sur le détecteur photosensible (44) présente un trou diaphragme (42) et un objectif de reproduction d'image (43) disposé derrière ledit diaphragme;
comme dispositif destiné à l'analyse détaillée de la répartition d'énergie, le détecteur photosensible (44) présente une multiplicité d'éléments capteurs de lumière (45, 46);
l'intervalle séparant la cellule de mesure (15) du détecteur photosensible (44) peut être mis en donnée dans le dispositif d'analyse (3).

2. Appareil selon la revendication 1, caractérisé en ce que la cellule de mesure (15) peut être déplacée et bloquée le long de barres de guidage (31, 32, 33) orientées parallèlement à l'axe optique du système optique.

3. Appareil selon l'une quelconque des revendications 1 et 2, caractérisé en ce que les éléments capteurs de lumière (45, 46) du détecteur photosensible (44) sont formés en arcs annulaires échelonnés et disposés en secteurs de cercle, les arcs annulaires de l'un des secteurs de cercle (45) étant décalés radialement par rapport aux arcs annulaires de l'autre secteur de cercle (46).

4. Appareil selon l'une quelconque des revendications 1 à 3, caractérisé en ce que la cellule de mesure (15) comporte deux lames (18, 19) planes parallèles, en verre poli, laissant passer la lumière, et qui délimitent au moins un espace de stabilisation (22) et un espace de mesure (21), des moyens de création (26, 27) de courant laminaire étant logés dans ledit espace de stabilisation (22).

5. Appareil selon la revendication 4, caractérisé en ce que les moyens de création de courant

## 9

laminaire consistent en des parois de guidage parallèles entre elles (26) et en des canaux (27) en forme de fentes et disposés entre lesdites parois de guidage (26).

6. Appareil selon l'une quelconque des revendications 1 à 5, caractérisé en ce qu'un châssis de support (30) est prévu pour le laser (40), le système optique (41 à 43), la cellule de mesure (15) et le détecteur photosensible (44), ledit châssis de support (30) présentant des barres (31, 32, 33) parallèles les unes aux autres et servant de guidages, des plaques (34 à 37) étant fixées entre lesdites barres (31 à 33), et en ce que le châssis de support (30) est logé de façon flottante par rapport au boîtier extérieur (85).

7. Appareil selon la revendication 6, caractérisé en ce que les plaques (34 à 37) présentent des évidements disposés le long de l'axe optique et dans lesquels respectivement le laser (40) et le système optique (41, 42, 43) sont maintenus par des moyens de fixation.

8. Appareil selon la revendication 7, caractérisé en ce que le moyen de fixation du diaphragme (42) présente des cadres (55, 56) pouvant être déplacés et bloqués perpendiculairement à l'axe optique, ainsi qu'un écrou (57) réglable selon l'axe optique.

9. Appareil selon l'une quelconque des revendications 7 et 8, caractérisé en ce que le moyen de fixation de l'objectif de reproduction d'image (43) présente une suspension (71, 72) pouvant être ajustée et bloquée selon deux directions axiales (73, 74).

## Claims

1. Apparatus for determination of particle sizes, comprising a laser (40) for generating a monochromatic light beam,
   a photodetector (44),
   an optical system (41 to 43) for concentrating the beam on the photodetector (44),
   a device (1) for supplying a test piece to a measuring cell (15) disposed in the light beam, so that the test-piece generates a diffraction spectrum,
   a device (45, 46) for fine resolution of the energy distribution of the diffraction spectrum on the photodetector (44), and
   an analytical device (3) for calculating particle-size distributions from the energy distribution of the diffraction spectrum on the photodetector (44) and the set measuring range,
   characterised by the following features:
   the measuring cell (15) is disposed in a convergent beam (4) immediately in front of the photodetector (44)
   the apparatus is constructed so that the measuring cell (15) can be brought fairly near the photodetector (44) in order to measure very small

## 10

particle sizes, and the distance between the measuring cell (15) and the photodetector (44) determines the size class of the set measuring range at which the particle sizes are determined in optimum manner;
   the optical system for generating the beam (4) converging towards the photodetector (44) comprises an apertured disc (42) and an image-forming lens (43) disposed behind it;
   the photodetector (44) has a number of light-receiving elements (45, 46) for finely resolving the energy distribution, and
   the distance between the measuring cell (15) and the photodetector (44) can be input into the analytical device (3).

2. Apparatus according to claim 1, characterised in that the measuring cell (15) can be moved and locked along guides (31, 32, 33) extending parallel to the optical axis of the optical system.

3. Apparatus according to claim 1 or 2, characterised in that the light-receiving elements (45, 46) of the photodetector (44) are in the form of staggered circular arcs disposed in circular sectors, the arcs of one sector (45) being radially offset from the arcs of the other sector (46).

4. Apparatus according to any of claims 1 to 3, characterised in that the measuring cell (15) comprises two light-transmitting plates (18, 19) having parallel ground surfaces and surrounding at least one stabilisation chamber (22) and one measuring chamber (21), the stabilisation chamber (22) containing means (26, 27) for producing laminar flow.

5. Apparatus according to claim 4, characterised in that the means for producing laminar flow comprise parallel baffles (26) and slot-like channels (27) disposed between them.

6. Apparatus according to any of claims 1 to 5, characterised in that a frame (30) is provided for holding the laser (40), the optical system (41 to 43), the measuring cell (15) and the photodetector (44) and comprises guides in the form of parallel rods (31, 32, 33) and plates (34 to 37) secured between the guides, and the frame (30) is mounted for floating relative to the outer casing (85).

7. Apparatus according to claim 6, characterised in that the plates (34 to 37) are formed with recesses disposed along the optical axis and in which the laser (40) and the optical system (41, 42, 43) are held by securing means.

8. Apparatus according to claim 7, characterised in that the means for securing the apertured disc (42) comprise frames (55, 56) movable and lockable transversely to the optical axis and a nut (57) adjustable in the direction of the optical axis.

9. Apparatus according to claim 7 or 8, characterised in that the means for securing the image-forming lens (43) comprises a suspension (71, 72) adjustable and lockable in two axial directions (73, 74).

Fig. 1

Fig. 2

EP 0 207 176 B1

**Fig. 3**

**Fig. 4**

**Fig. 5**

5

## Fig. 6

63

58  58

54  55  59  56  59  57

64

62

58  58

61

## Fig. 7

74

70

72

71

73

## Fig. 8

36

76  75

76  75

71  43

72

## Fig. 9

46  45

48

47